(19) **Europäisches Patentamt**
**European Patent Office**
**Office européen des brevets**

(11) **EP 4 670 929 A1**

(12) **EUROPEAN PATENT APPLICATION**
published in accordance with Art. 153(4) EPC

(43) Date of publication:
**31.12.2025 Bulletin 2026/01**

(21) Application number: **24770027.1**

(22) Date of filing: **15.03.2024**

(51) International Patent Classification (IPC):
**B25J 19/00** (2006.01)    **B25J 9/16** (2006.01)

(52) Cooperative Patent Classification (CPC):
**B25J 9/16; B25J 19/00; Y02T 90/00**

(86) International application number:
**PCT/CN2024/081899**

(87) International publication number:
**WO 2024/188337 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.03.2023  CN 202310251703**

(71) Applicant: **Suzhou Elite Robotics Co., Ltd
Suzhou, Jiangsu 215000 (CN)**

(72) Inventors:
• **WANG, Ke**
  **Suzhou, Jiangsu 215000 (CN)**
• **SUN, Kai**
  **Suzhou, Jiangsu 215000 (CN)**
• **CAO, Yunan**
  **Suzhou, Jiangsu 215000 (CN)**

(74) Representative: **RavensPAT Patentanwälte
Partnerschaft mbB
Großtobeler Straße 39
88276 Berg / Ravensburg (DE)**

(54) **JOINT DIAGNOSIS METHOD AND APPARATUS, AND ROBOT**

(57)    A joint diagnosis method, including steps: collecting data of a current motion trajectory of a robot, solving for a frictional force of a joint, performing temperature compensation on a friction model based on a feedback temperature of the joint, and solving for an output torque of a connecting rod of the joint, to acquire a dynamics model error; performing detection and analysis on the dynamics model error, to acquire modal analysis and joint wear degree results; and determining, based on the modal analysis and joint wear degree results, whether the joint is in an abnormal wear state, and if the joint is in the abnormal wear state, triggering a joint abnormity alarm, otherwise, performing calibration on the friction model.

collecting data of a current motion trajectory of a robot, solving for a frictional force of a joint, performing temperature compensation on a friction model based on a feedback temperature of the joint, and solving for an output torque of a linkage of the joint, to acquire a dynamics model error —S100

performing detection and analysis on the dynamics model error, to acquire modal analysis and joint wear degree results —S200

determining, based on the modal analysis and joint wear degree results, whether the joint is in an abnormal wear state, and if the joint is in the abnormal wear state, triggering a joint abnormity alarm, otherwise, performing calibration on the friction model —S300

**FIG. 1**

EP 4 670 929 A1

**Description**

## TECHNICAL FIELD

The present disclosure relates to the field of robotics technology, and more specifically to a joint diagnosis method and apparatus, and robot.

## BACKGROUND

With the rapid development of robotics technology, the application of robotics technology in industrial production has become increasingly widespread. However, most of prior joint friction models are identified only once before leaving the factory. Complex friction phenomena exists between the gears, bearings, and other transmission structures disposed inside a robot joint, which may lead to joint wear, causing a frictional force of the joint to change accordingly, with errors of the originally identified friction model increasing, thereby affecting the accuracy of the models.

Therefore, it is necessary to provide a method for improving the accuracy of external torque estimation and for real time monitoring of joint operating state.

## SUMMARY

In order to solve the aforementioned problems, the present disclosure provides a joint diagnosis method, including steps:

S100, collecting data of a current motion trajectory of a robot, solving for a frictional force of a joint, performing temperature compensation on a friction model based on a feedback temperature of the joint, and solving for an output torque of a linkage of the joint, to acquire a dynamics model error;

S200, performing detection and analysis on the dynamics model error, to acquire modal analysis and joint wear degree results;

S300, determining, based on the modal analysis and joint wear degree results, whether the joint is in an abnormal wear state, and if the joint is in the abnormal wear state, triggering a joint abnormity alarm, otherwise, performing calibration on the friction model;

in a process of the detection and analysis of the dynamics model error, performing an FFT transform on the dynamics model error firstly, acquiring a signal amplitude of a modal that is greater than a frequency f in the dynamics model error based on the FFT transform results, and determining whether the signal amplitude exceeds a set first threshold t1;

if the signal amplitude exceeds the set first threshold t1, the joint is in the abnormal wear state, triggering the joint abnormity alarm, and prompting for necessity for joint replacement; and if the signal amplitude does not exceed the set first threshold t1, further determining whether the dynamics model error exceeds a second threshold t2;

if the dynamics model error does not exceed the second threshold t2, it is indicated that a state of the current joint is normal and the dynamics model is acceptable, the joint is not in the abnormal wear state, and there is no necessity for calibration on the friction model, also executing the step S100; and if the dynamics model error exceeds the second threshold t2, further determining whether the dynamics model error exceeds k times the calculated value of the friction model stored in the current joint;

if the dynamics model error exceeds k times for the friction model stored in the current joint, it is indicated that the current joint is in the abnormal wear state, triggering the joint abnormity alarm, and prompting for necessity for joint replacement; and if the dynamics model error does not exceed k times for the friction model stored in the current joint, it is indicated that the joint is in a normal wear state, and an operation of performing calibration on the friction model is required;

the performing calibration on the friction model including at least steps: executing a calibration trajectory by the joint of the robot and collecting the motion feedback data of the robot in real time, filtering the motion feedback data, extracting friction torques of joints at different velocity segments, solving for online calibrated parameters of the friction model, and storing the parameters of the friction model into the joint of the robot.

The present disclosure further provides a joint diagnosis apparatus, including:

a robot dynamics model calculation device configured for realizing functions of acquiring feedback data, calculating for linkage dynamics for the robot, calculating a frictional force, performing temperature compensation, and calculating a model error;

a joint abnormity detection device configured for detecting and determining whether a joint is in an abnormal wear state, and if the joint is in the abnormal wear state, triggering a joint abnormity alarm, otherwise, performing calibration on a friction model;

a friction model calibration device configured for executing a calibration trajectory, filtering motion feedback data, and solving for calibrated parameters of the friction model based on the motion data of the robot;

a joint abnormity alarm device configured for conveying a warning message to users about replacing the joint;

in a process of the detection and analysis of the dynamics model error, performing an FFT transform on the dynamics model error firstly, acquiring a signal amplitude of a modal that is greater than a frequency f in the dynamics model error based on the FFT transform results, and determining whether the signal amplitude exceeds a set first threshold t1;

if the signal amplitude exceeds the set first threshold t1, the joint is in the abnormal wear state, triggering the joint abnormity alarm, and prompting for necessity for joint replacement; and if the signal amplitude does not exceed the set first threshold t1, further determining whether the dynamics model error exceeds a second threshold t2;

if the dynamics model error does not exceed the second threshold t2, it is indicated that a state of the current joint is normal and the dynamics model is acceptable, the joint is not in the abnormal wear state, and there is no necessity for calibration on the friction model, also executing the step S100; and if the dynamics model error exceeds the second threshold t2, further determining whether the dynamics model error exceeds k times the calculated value of the friction model stored in the current joint;

if the dynamics model error exceeds k times for the friction model stored in the current joint, it is indicated that the current joint is in the abnormal wear state, triggering the joint abnormity alarm, and prompting for necessity for joint replacement; and if the dynamics model error does not exceed k times for the friction model stored in the current joint, it is indicated that the joint is in a normal wear state, and an operation of performing calibration on the friction model is required;

the performing calibration on the friction model including at least steps: executing a calibration trajectory by the joint of the robot and collecting the motion feedback data of the robot in real time, filtering the motion feedback data, extracting friction torques of joints at different velocity segments, solving for online calibrated parameters of the friction model, and storing the parameters of the friction model into the joint of the robot.

The present disclosure further provides a robot including the aforementioned joint diagnosis apparatus.

Compared with the prior art, the beneficial effects of the present disclosure are as follows:

(1) the present disclosure detects and analyzes the dynamics model error through a set joint modal detection module and a set joint wear degree detection module, for a time domain and a frequency domain, respectively. In a process of the detection and analysis of the dynamics model error, performing an FFT transform on the dynamics model error firstly, acquiring a signal amplitude of a modal that is greater than a frequency f in the dynamics model error based on the FFT transform results. Further comparing the signal amplitude with different thresholds, determining whether performing calibration on the friction model is needed based on magnitudes of the dynamics model error and k times (k>1) for the friction model stored in the current joint. The various components work together, which is beneficial to improving the accuracy of the friction model of the joint;

(2) in the process of the performing calibration on the friction model, filtering the motion feedback data collected in real time, that is, performing a forward low-pass filtering on the data to be filtered firstly, and then performing a low-pass filtering with the same cutoff frequency in a reversed order on the data after the forward low-pass filtering, so that the delays caused by the low-pass filtering may cancel each other out, which is beneficial to extracting friction torques of joints at different velocity segments with higher accuracy;

(3) the joint diagnosis method provided by the present disclosure does not require cumbersome disassembly identification, capable of online performing calibration on the friction model of the joint under normal wear state of the entire machine, improving the accuracy of the external torque estimation, thereby reducing the probability of false alarms in collision detection and enhancing the dragging experience. Additionally, it may also detect the operating state of the joint in real time to timely identify joint failures and provide alarm prompts for joint replacement.

**BRIEF DESCRIPTION OF DRAWINGS**

To more clearly describe the technical solutions in the embodiments of the present disclosure or the prior art, the drawings required for describing the embodiments or the prior art are introduced briefly below. It is obvious that the drawings described below involve merely some of embodiments of the present disclosure, and other drawings may be derived based on these drawings without inventive efforts, for those skilled in the art.

FIG. 1 shows a schematic flowchart of a joint diagnosis method based on current feedback according to the present disclosure;

FIG. 2 shows a flowchart of step S100 of a joint diagnosis method according to the present disclosure;

FIG. 3 shows another flowchart of a joint diagnosis method according to the present disclosure;

FIG. 4 shows a flowchart of step S310 of a joint diagnosis method according to the present disclosure;

FIG. 5 shows a schematic diagram of a robot dynamics model calculation device in a joint diagnosis apparatus according to the present disclosure;

FIG. 6 shows a schematic diagram of a joint abnormity detection device in a joint diagnosis apparatus according to the present disclosure;

FIG. 7 shows a schematic diagram of a friction model calibration device in a joint diagnosis apparatus according to the present disclosure;

FIG. 8 shows a schematic diagram of a joint abnormity alarm device in a joint diagnosis apparatus according to the present disclosure.

## DETAILED DESCRIPTION OF THE EMBODIMENTS

In order to enable those skilled in the art to better understand the technical solutions of the present disclosure, the technical solutions in the embodiments of the present disclosure will be described clearly and completely below with reference to the drawings in the embodiments of the present disclosure. Obviously, the described embodiments are only part of the embodiments of the present disclosure, not all of the embodiments. All other embodiments derived by those skilled in the art based on the embodiments of the present disclosure without making inventive efforts shall fall within the scope of protection of the present disclosure.

It should be noted that the terms "first" and "second" and the like in the specification and claims of the present disclosure and the aforementioned drawings are used to distinguish between similar objects and are not necessarily used to describe a specific order or sequence. It should be understood that numbers used in this way may be interchanged in appropriate circumstances, so that the embodiments of the present disclosure described here may be implemented in an order other than those illustrated or described here. In addition, the terms "including", "comprising" and any of their variations are intended to cover non-exclusive inclusions. For example, a process, method, system, product, or device including a series of steps or units is not limited to those steps or units that are clearly listed, but may also include other steps or units that are not clearly listed or that are inherent to the process, method, product, or device.

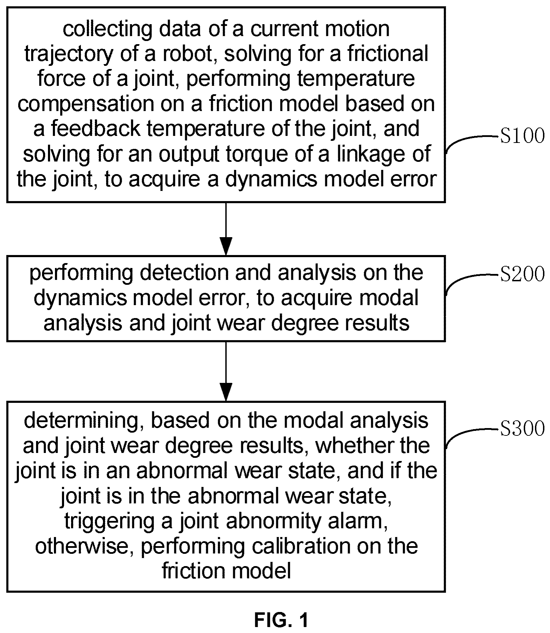

FIG. 1 shows a schematic flowchart of a joint diagnosis method according to an embodiment of the present disclosure, which may be applicable to joint diagnosis scenarios. This method may be executed by a joint diagnosis apparatus, which may be implemented in the form of hardware and/or software, and may also be configured in an electronic device.

As shown in FIG. 1, an embodiment of the present disclosure provides a joint diagnosis method, including steps:

S100, collecting data of a current motion trajectory of a robot, solving for the frictional force of a joint, performing temperature compensation on a friction model based on a feedback temperature of the joint, and solving for an output torque of a linkage of the joint, to acquire a dynamics model error;

S200, performing detection and analysis on the dynamics model error, to acquire modal analysis and joint wear degree results;

S300, determining, based on the modal analysis and joint wear degree results, whether the joint is in an abnormal wear state, and if the joint is in the abnormal wear state, triggering a joint abnormity alarm, otherwise, performing calibration on the friction model.

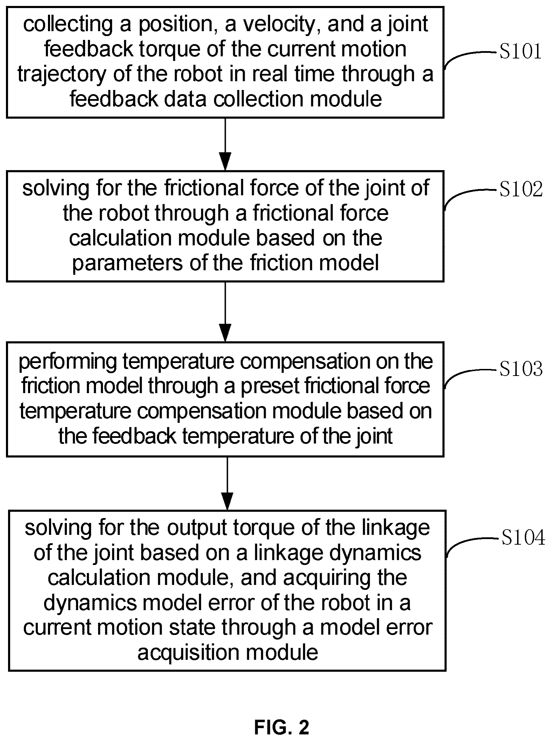

FIG. 2 shows a flowchart of step S100 of a joint diagnosis method according to the present disclosure. As shown in FIG. 2, the step S100 specifically includes steps:

S101, collecting a position, a velocity, and a joint feedback torque of the current motion trajectory of the robot in real time through a feedback data collection module.

Further, collecting the position $q$, the velocity $\dot{q}$, and the joint feedback torque $\tau_{motor}$ of the current motion trajectory of the robot in real time through a preset feedback data collection module to prepare for calculation for the dynamics model. The joint feedback torque $\tau_{motor}$ is derived from a joint feedback current $I_{motor}$ and a joint torque sensitivity coefficient $k_t$, represented by an equation as below:

$$\tau_{motor} = k_t I_{motor} \qquad (1).$$

S102, solving for the frictional force of the joint of the robot through a frictional force calculation module based on the parameters of the friction model.

In solving for the frictional force of the joint, the friction model includes but is not limited to the Stribeck model, Coulomb-viscous model, Dahl model, and LuGre model.

Further, in specific embodiments, the Stribeck model is used as the friction model, and the joint frictional force is represented by an equation as below:

$$\tau_f = [f_c + (f_s - f_c)e^{-\left|\frac{\dot{q}}{v_s}\right|^{\alpha}}]\,\mathrm{sgn}(\dot{q}) + f_v\dot{q} \qquad (2)$$

in equation (2), $f_c$ is a Coulomb friction, $f_s$ is a maximum static friction, $v_s$ is a Stribeck effect velocity, $\alpha$ is an empirical coefficient related to a reducer type, $f_v$ is a viscous frictional force coefficient, sgn( ) is a sign function, and $\dot{q}$ is a velocity of the joint of the robot.

S103, performing temperature compensation on the friction model through a preset frictional force temperature compensation module based on the feedback temperature of the joint.

Further, since lubrication conditions of the reducer of the joint of the robot vary at different temperatures, it is necessary to perform temperature compensation on different friction models. The temperature compensation is carried out through a frictional force temperature compensation model, represented by an equation as below:

$$\tau_{f,T} = f(\dot{q}, T) \qquad (3)$$

in equation (3), $\tau_{f,T}$ is an impact value of the temperature on the frictional force, $f(\,)$ is a nonlinear function representing the temperature compensation model, $\dot{q}$ is the velocity of the joint of the robot, and $T$ is a temperature feedback value of the reducer of the joint.

The calculated value of the frictional force after the temperature compensation is represented by an equation as below:

$$\tau_{f,total} = \tau_f + \tau_{f,T} \qquad (4).$$

S104, solving for the output torque of the linkage of the joint based on a linkage dynamics calculation module, and acquiring the dynamics model error of the robot in a current motion state through a model error acquisition module.

Further, the output torque of the linkage of the joint is calculated, as represented by an equation below:

$$\tau_{link} = M(q)\ddot{q} + C(q,\dot{q})\dot{q} + G(q) \qquad (5)$$

in equation (5), $\tau_{link}$ is the output torque of the linkage of the joint, $M(q)$ is an inertia parameter matrix of the robot, $C(q,\dot{q})$ is a centrifugal force and Coriolis force terms, and $G(q)$ is a gravity torque. Since the dynamics parameters of the linkage have been identified as a whole before the robot leaves the factory, the dynamics error of the linkage of the robot may be considered as 0.

Further, in the model error acquisition module, the dynamics model error is derived based on the joint feedback torque, the frictional force after the temperature compensation, and the output torque of the linkage of the joint, as represented by an equation below:

$$\tau_{err} = \tau_{motor} - \tau_{link} - \tau_{f,total} \qquad (6).$$

In the step S200 of the present disclosure, performing detection and analysis on the dynamics model error refers to performing detection and analysis on the dynamics model error through a joint modal detection module and a joint wear degree detection module, for a time domain and a frequency domain, respectively.

In the step S300 of the present disclosure, determining, based on the modal analysis and joint wear degree results, whether the joint is in an abnormal wear state, and if the joint is in the abnormal wear state, triggering a joint abnormity alarm, otherwise, performing calibration on the friction model.

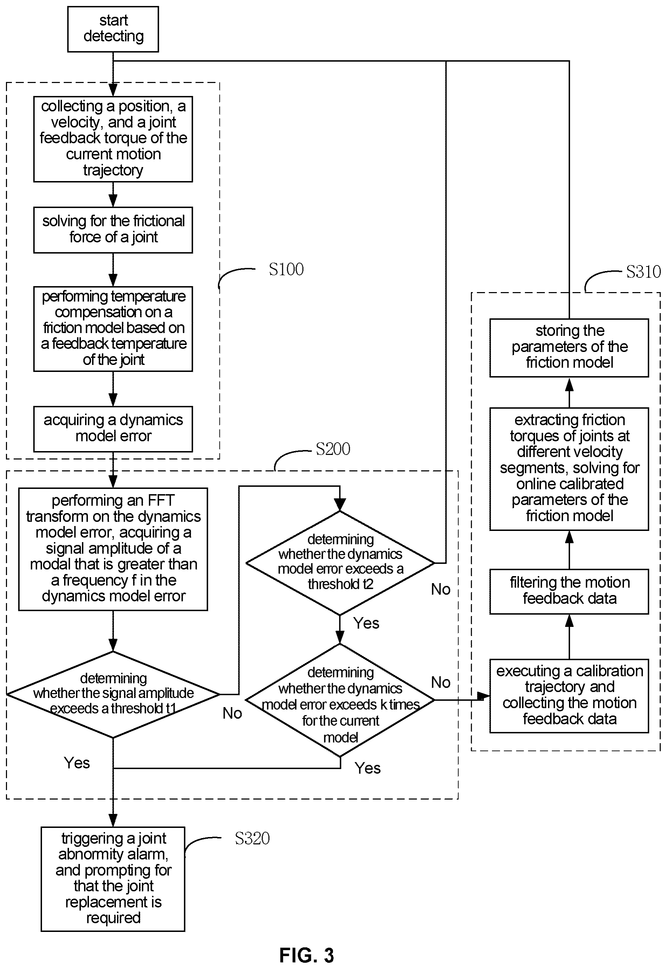

FIG. 3 shows another flowchart of a joint diagnosis method according to the present disclosure. As shown in FIG. 3, in a process of the detection and analysis of the dynamics model error, performing an FFT transform on the dynamics model error firstly, acquiring a signal amplitude of a modal that is greater than a frequency f in the dynamics model error based on the FFT transform results, and determining whether the signal amplitude exceeds a set first threshold t1.

The FFT transform, is an efficient algorithm for DFT, referred to as the Fast Fourier Transform. The FFT transform is one of the most fundamental methods in time-domain-to-frequency-domain transformation analysis.

If the signal amplitude exceeds the set first threshold t1, the joint is in the abnormal wear state, triggering the joint abnormity alarm, and prompting for necessity for joint replacement; and if the signal amplitude does not exceed the set first threshold t1, further determining whether the dynamics model error exceeds a second threshold t2.

If the dynamics model error does not exceed the second threshold t2, it is indicated that a state of the current joint is normal and the dynamics model is acceptable, the joint is not in the abnormal wear state, and there is no necessity for calibration on the friction model, also executing the step S100; and if the dynamics model error exceeds the second threshold t2, it is necessary to further determine whether the dynamics model error exceeds k times (k>1) the calculated value of the friction model stored in the current joint.

If the dynamics model error exceeds k times for the friction model stored in the current joint, it is indicated that a wear degree of the current joint is relatively severe and the current joint is in the abnormal wear state, triggering the joint abnormity alarm, and prompting for necessity for joint replacement; and if the dynamics model error does not exceed k times for the friction model stored in the current joint, it is indicated that the joint is in a normal wear state, and at this time the model error is relatively large, and an operation of performing calibration on the friction model is required.

As shown in FIG. 3, the performing calibration on the friction model specifically includes steps:
S310, executing a calibration trajectory by the joint of the robot and collecting the motion feedback data of the robot in real time, filtering the motion feedback data, extracting friction torques of joints at different velocity segments, solving for online calibrated parameters of the friction model, and storing the parameters of the friction model into the joint of the robot.

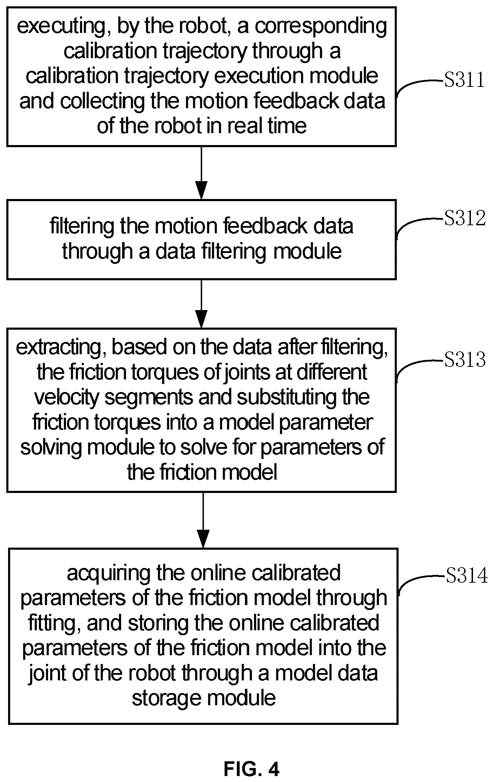

FIG. 4 shows a flowchart of step S310 of a joint diagnosis method according to the present disclosure. As shown in FIG. 4, the step S310 includes at least steps:
S311, executing, by the robot, a corresponding calibration trajectory through a calibration trajectory execution module and collecting the motion feedback data of the robot in real time.

Further, the calibration trajectory is a motion trajectory at multi-velocity segments. While the calibration trajectory is executed by the joint of the robot, the feedback data including feedback position, feedback velocity, and joint feedback torque is recorded.

S312, filtering the motion feedback data through a data filtering module.

Further, the filtering is a zero-delay low-pass filtering.

Further, the zero-delay low-pass filtering refers to performing a forward low-pass filtering on the data to be filtered firstly, and then performing a low-pass filtering with the same cutoff frequency in a reversed order on the data after the forward low-pass filtering, so that the delays caused by the low-pass filtering may cancel each other out.

S313, extracting, based on the data after filtering, the friction torques of joints at different velocity segments and substituting the friction torques into a model parameter solving module to solve for parameters of the friction model.

Based on the data after filtering, the friction torques of joints at different velocity segments are extracted. The extraction of friction torques at different velocity segments are represented by an equation as below:

$$\tau_f(\pm\dot{q}) = \pm(\tau_{motor}^{+} - \tau_{motor}^{-})/2 \qquad (7)$$

in equation (7), $\tau_{motor}^{+}$ is the torque applied while the joint moves forward, and $\tau_{motor}^{-}$ is the torque applied while the joint moves backward.

S314, acquiring the online calibrated parameters of the friction model through fitting, and storing the online calibrated parameters of the friction model into the joint of the robot through a model data storage module.

Further, the fitting is performed on equation (2) by using a fitting algorithm to obtain the calibrated parameters of the friction model, and the fitting algorithm includes but is not limited to the nonlinear least squares method.

Further, as shown in FIG. 3, when the joint is in the abnormal wear state, triggering the joint abnormity alarm, and prompting for necessity for joint replacement includes a step:
S320, triggering the joint abnormity alarm, and issuing externally an alarm by a joint abnormal state alarm module, prompting for that the state of the current joint is abnormal and the replacement is required.

The joint diagnosis method provided by the present disclosure does not require cumbersome disassembly identification, capable of online performing calibration on the friction model of the joint under normal wear state of the entire machine, improving the accuracy of the external torque estimation, thereby reducing the probability of false alarms in collision detection and enhancing the dragging experience. Additionally, it may also detect the operating state of the joint in real time to timely identify joint failures and provide alarm prompts for joint replacement.

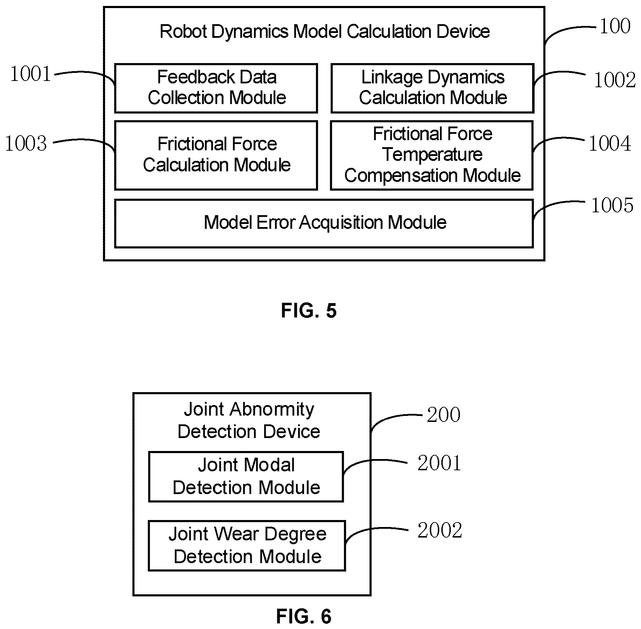

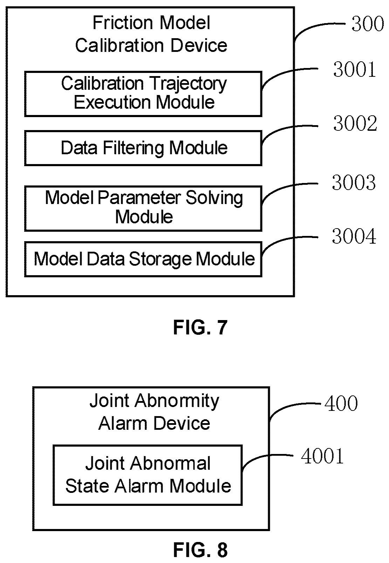

FIG. 5 to FIG. 8 are structural block diagrams of a joint diagnosis apparatus according to the present disclosure, and the embodiment may be applicable to joint diagnosis scenarios. The apparatus may be implemented in the form of hardware and/or software, and may be integrated into a computer device with application development functions.

As shown in FIG. 5 to FIG. 8, the joint diagnosis apparatus includes: a robot dynamics model calculation device 100 configured for realizing functions of acquiring feedback data, calculating for linkage dynamics for the robot, calculating a frictional force, performing temperature compensation, and calculating a model error; a joint abnormity detection device 200 configured for detecting and determining whether a joint is in an abnormal wear state, and if the joint is in the abnormal wear state, triggering a joint abnormity alarm, otherwise, performing calibration on a friction model; a friction model calibration device 300 configured for executing a calibration trajectory, filtering motion feedback data, and solving for calibrated parameters of the friction model based on the motion data of the robot; a joint abnormity alarm device 400 configured for conveying a warning message to users about replacing the joint, including but not limited to devices such as loudspeakers, electronic displays, etc.

Further, the robot dynamics model calculation device 100 includes a feedback data collection module 1001, a linkage dynamics calculation module 1002, a frictional force calculation module 1003, a frictional force temperature compensation module 1004, and a model error acquisition module 1005, where the joint abnormity detection device 200 includes a joint modal detection module 2001 and a joint wear degree detection module 2002; the friction model calibration device 300 includes a calibration trajectory execution module 3001, a data filtering module 3002, a model parameter solving module 3003, and a model data storage module 3004; the joint abnormity alarm device 400 includes a joint abnormal state alarm module 4001.

The embodiment of the present disclosure further discloses a robot, including: the aforementioned joint diagnosis apparatus.

It should be noted that the robot described in the embodiments of the present disclosure is a robot that applies the aforementioned joint diagnosis apparatus. Therefore, all embodiments of the aforementioned joint diagnosis apparatus are applicable to the robot and can achieve the same or similar beneficial effects.

It should be understood that various forms of the processes shown above may be used, including reordering, adding, or deleting steps. For example, the steps described in the present disclosure may be executed in parallel, sequentially, or in different orders, as long as the desired results of the technical solution of the present disclosure may be achieved. The present disclosure does not impose any restrictions in this regard.

The aforementioned specific embodiments do not constitute a limitation on the scope of protection of the present disclosure. Those skilled in the art should understand that various modifications, combinations, sub-combinations, and substitutions may be made based on design requirements and other factors. Any modifications, equivalent substitutions, and improvements made within the spirit and principles of the present disclosure should be included within the scope of protection of the present disclosure.

**Claims**

1. A joint diagnosis method, **characterized by** comprising steps:

    S100, collecting data of a current motion trajectory of a robot, solving for a frictional force of a joint, performing temperature compensation on a friction model based on a feedback temperature of the joint, and solving for an output torque of a linkage of the joint, to acquire a dynamics model error;

    S200, performing detection and analysis on the dynamics model error, to acquire modal analysis and joint wear degree results;

    S300, determining, based on the modal analysis and joint wear degree results, whether the joint is in an abnormal wear state, and if the joint is in the abnormal wear state, triggering a joint abnormity alarm, otherwise, performing calibration on the friction model;

    in a process of the detection and analysis of the dynamics model error, performing an FFT transform on the dynamics model error firstly, acquiring a signal amplitude of a modal that is greater than a frequency f in the dynamics model error based on the FFT transform results, and determining whether the signal amplitude exceeds a set first threshold t1;

    if the signal amplitude exceeds the set first threshold t1, the joint is in the abnormal wear state, triggering the joint abnormity alarm, and prompting for necessity for joint replacement; and if the signal amplitude does not exceed the set first threshold t1, further determining whether the dynamics model error exceeds a second threshold t2;

    if the dynamics model error does not exceed the second threshold t2, it is indicated that a state of the current joint is normal and the dynamics model is acceptable, the joint is not in the abnormal wear state, and there is no necessity for calibration on the friction model, also executing the step S100; and if the dynamics model error exceeds the second threshold t2, further determining whether the dynamics model error exceeds k times the calculated value of the friction model stored in the current joint;

if the dynamics model error exceeds k times for the friction model stored in the current joint, it is indicated that the current joint is in the abnormal wear state, triggering the joint abnormity alarm, and prompting for necessity for joint replacement; and if the dynamics model error does not exceed k times for the friction model stored in the current joint, it is indicated that the joint is in a normal wear state, and an operation of performing calibration on the friction model is required;

the performing calibration on the friction model comprising at least steps: executing a calibration trajectory by the joint of the robot and collecting the motion feedback data of the robot in real time, filtering the motion feedback data, extracting friction torques of joints at different velocity segments, solving for online calibrated parameters of the friction model, and storing the parameters of the friction model into the joint of the robot.

2. The joint diagnosis method according to claim 1, **characterized in that** the step S100 comprises:

collecting a position, a velocity, and a joint feedback torque of the current motion trajectory of the robot in real time through a feedback data collection module;

solving for the frictional force of the joint of the robot through a frictional force calculation module based on the parameters of the friction model;

performing temperature compensation on the friction model through a preset frictional force temperature compensation module based on the feedback temperature of the joint;

solving for the output torque of the linkage of the joint based on a linkage dynamics calculation module, and acquiring the dynamics model error of the robot in a current motion state through a model error acquisition module.

3. The joint diagnosis method according to claim 1, **characterized in that** performing detection and analysis on the dynamics model error in the step S200 is performing detection and analysis on the dynamics model error through a joint modal detection module and a joint wear degree detection module, for a time domain and a frequency domain, respectively.

4. The joint diagnosis method according to claim 1, **characterized in that** the executing a calibration trajectory by the joint of the robot and collecting the motion feedback data of the robot in real time, filtering the motion feedback data, extracting friction torques of joints at different velocity segments, solving for online calibrated parameters of the friction model, and storing the parameters of the friction model into the joint of the robot specifically includes:

executing, by the robot, a corresponding calibration trajectory through a calibration trajectory execution module and collecting the motion feedback data of the robot in real time;

filtering the motion feedback data through a data filtering module;

extracting, based on the data after filtering, the friction torques of joints at different velocity segments and substituting the friction torques into a model parameter solving module to solve for parameters of the friction model;

acquiring the online calibrated parameters of the friction model through fitting, and storing the online calibrated parameters of the friction model into the joint of the robot through a model data storage module.

5. The joint diagnosis method according to claim 4, **characterized in that** the calibration trajectory is a motion trajectory at multi-velocity segments.

6. The joint diagnosis method according to claim 1, **characterized in that** the joint abnormity alarm in the step S300 at least comprises a step: triggering the joint abnormity alarm, and issuing an alarm, by a joint abnormal state alarm module, prompting for that the state of the current joint is abnormal and the replacement is required.

7. A joint diagnosis apparatus, **characterized by** comprising:

a robot dynamics model calculation device configured for realizing functions of acquiring feedback data, calculating for linkage dynamics for the robot, calculating a frictional force, performing temperature compensation, and calculating a model error;

a joint abnormity detection device configured for detecting and determining whether a joint is in an abnormal wear state, and if the joint is in the abnormal wear state, triggering a joint abnormity alarm, otherwise, performing calibration on a friction model;

a friction model calibration device configured for executing a calibration trajectory, filtering motion feedback data, and solving for calibrated parameters of the friction model based on the motion data of the robot;

a joint abnormity alarm device configured for conveying a warning message to users about replacing the joint;

in a process of the detection and analysis of the dynamics model error, performing an FFT transform on the dynamics model error firstly, acquiring a signal amplitude of a modal that is greater than a frequency f in the dynamics model error based on the FFT transform results, and determining whether the signal amplitude exceeds a set first threshold t1;

if the signal amplitude exceeds the set first threshold t1, the joint is in the abnormal wear state, triggering the joint abnormity alarm, and prompting for necessity for joint replacement; and if the signal amplitude does not exceed the set first threshold t1, further determining whether the dynamics model error exceeds a second threshold t2;

if the dynamics model error does not exceed the second threshold t2, it is indicated that a state of the current joint is normal and the dynamics model is acceptable, the joint is not in the abnormal wear state, and there is no necessity for calibration on the friction model, also executing the step S100; and if the dynamics model error exceeds the second threshold t2, further determining whether the dynamics model error exceeds k times the calculated value of the friction model stored in the current joint;

if the dynamics model error exceeds k times for the friction model stored in the current joint, it is indicated that the current joint is in the abnormal wear state, triggering the joint abnormity alarm, and prompting for necessity for joint replacement; and if the dynamics model error does not exceed k times for the friction model stored in the current joint, it is indicated that the joint is in a normal wear state, and an operation of performing calibration on the friction model is required; and

the performing calibration on the friction model comprising at least steps: executing a calibration trajectory by the joint of the robot and collecting the motion feedback data of the robot in real time, filtering the motion feedback data, extracting friction torques of joints at different velocity segments, solving for online calibrated parameters of the friction model, and storing the parameters of the friction model into the joint of the robot.

8. The joint diagnosis apparatus according to claim 7, **characterized in that** the robot dynamics model calculation device comprises a feedback data collection module, a linkage dynamics calculation module, a frictional force calculation module, a frictional force temperature compensation module, and a model error acquisition module, wherein the joint abnormity detection device comprises a joint modal detection module and a joint wear degree detection module; the friction model calibration device comprises a calibration trajectory execution module, a data filtering module, a model parameter solving module, and a model data storage module; and the joint abnormity alarm device comprises a joint abnormal state alarm module.

9. A robot, **characterized by** comprising the joint diagnosis apparatus according to any one of claims 7 to 8.

collecting data of a current motion trajectory of a robot, solving for a frictional force of a joint, performing temperature compensation on a friction model based on a feedback temperature of the joint, and solving for an output torque of a linkage of the joint, to acquire a dynamics model error ⟋S100

performing detection and analysis on the dynamics model error, to acquire modal analysis and joint wear degree results ⟋S200

determining, based on the modal analysis and joint wear degree results, whether the joint is in an abnormal wear state, and if the joint is in the abnormal wear state, triggering a joint abnormity alarm, otherwise, performing calibration on the friction model ⟋S300

**FIG. 1**

collecting a position, a velocity, and a joint feedback torque of the current motion trajectory of the robot in real time through a feedback data collection module — S101

solving for the frictional force of the joint of the robot through a frictional force calculation module based on the parameters of the friction model — S102

performing temperature compensation on the friction model through a preset frictional force temperature compensation module based on the feedback temperature of the joint — S103

solving for the output torque of the linkage of the joint based on a linkage dynamics calculation module, and acquiring the dynamics model error of the robot in a current motion state through a model error acquisition module — S104

FIG. 2

```
                              ┌──────────────┐
                              │    start     │
                              │  detecting   │
                              └──────┬───────┘
                                     │
     ┌───────────────────────────────┼────────────────────────────────────────────────┐
     │  ┌─────────────────────────┐  │                                                 │
     │  │ collecting a position, a │  ↓                                                 │
     │  │ velocity, and a joint    │                                                    │
     │  │ feedback torque of the   │                                                    │
     │  │ current motion           │                                                    │
     │  │ trajectory               │                                                    │
     │  └──────────┬──────────────┘                                                     │
     │             ↓                                                                    │
     │  ┌─────────────────────────┐                                                     │
     │  │ solving for the frictional│                                                   │
     │  │ force of a joint         │                                          ─── S100  │
     │  └──────────┬──────────────┘                                                     │
     │             ↓                                                                    │
     │  ┌─────────────────────────┐                                                     │
     │  │ performing temperature   │                                                    │
     │  │ compensation on a        │                                                    │
     │  │ friction model based on  │                                                    │
     │  │ a feedback temperature   │                                                    │
     │  │ of the joint             │                                                    │
     │  └──────────┬──────────────┘                                                     │
     │             ↓                                                                    │
     │  ┌─────────────────────────┐                                                     │
     │  │ acquiring a dynamics     │                                                     │
     │  │ model error             │                                                     │
     │  └──────────┬──────────────┘                                                     │
     └─────────────┼────────────────────────────────────────────────────────────────┘
```

- performing an FFT transform on the dynamics model error, acquiring a signal amplitude of a modal that is greater than a frequency f in the dynamics model error

— S200

- determining whether the dynamics model error exceeds a threshold t2 — No / Yes

- determining whether the signal amplitude exceeds a threshold t1 — No / Yes

- determining whether the dynamics model error exceeds k times for the current model — No / Yes

— S310

- storing the parameters of the friction model
- extracting friction torques of joints at different velocity segments, solving for online calibrated parameters of the friction model
- filtering the motion feedback data
- executing a calibration trajectory and collecting the motion feedback data

- triggering a joint abnormity alarm, and prompting for that the joint replacement is required — S320

**FIG. 3**

executing, by the robot, a corresponding calibration trajectory through a calibration trajectory execution module and collecting the motion feedback data of the robot in real time —S311

filtering the motion feedback data through a data filtering module —S312

extracting, based on the data after filtering, the friction torques of joints at different velocity segments and substituting the friction torques into a model parameter solving module to solve for parameters of the friction model —S313

acquiring the online calibrated parameters of the friction model through fitting, and storing the online calibrated parameters of the friction model into the joint of the robot through a model data storage module —S314

**FIG. 4**

Robot Dynamics Model Calculation Device — 100

1001 — Feedback Data Collection Module

Linkage Dynamics Calculation Module — 1002

1003 — Frictional Force Calculation Module

Frictional Force Temperature Compensation Module — 1004

Model Error Acquisition Module — 1005

**FIG. 5**

Joint Abnormity Detection Device — 200

Joint Modal Detection Module — 2001

Joint Wear Degree Detection Module — 2002

**FIG. 6**

Friction Model
Calibration Device ——— 300

Calibration Trajectory
Execution Module ——— 3001

Data Filtering Module ——— 3002

Model Parameter Solving
Module ——— 3003

Model Data Storage Module ——— 3004

**FIG. 7**

Joint Abnormity
Alarm Device ——— 400

Joint Abnormal
State Alarm Module ——— 4001

**FIG. 8**

## INTERNATIONAL SEARCH REPORT

| | |
|---|---|
| International application No. | |
| | **PCT/CN2024/081899** |

### A. CLASSIFICATION OF SUBJECT MATTER

B25J19/00(2006.01)i; B25J9/16(2006.01)i

According to International Patent Classification (IPC) or to both national classification and IPC

### B. FIELDS SEARCHED

Minimum documentation searched (classification system followed by classification symbols)

IPC: B25J

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 艾利特, 机器人, 机械臂, 关节, 异常, 磨损, 状态, 检测, 监测, 诊断, 力矩, 电流, 摩擦力, 温度, robot?, manipulator, joint, wear, abnormally, diagnos+, detect+, torque, current, friction, temperature

### C. DOCUMENTS CONSIDERED TO BE RELEVANT

| Category* | Citation of document, with indication, where appropriate, of the relevant passages | Relevant to claim No. |
|---|---|---|
| PX | CN 116021554 A (SUZHOU ELITE ROBOT CO., LTD.) 28 April 2023 (2023-04-28) claims 1-10, and description, paragraphs [0019]-[0055], and figures 1-8 | 1-9 |
| A | CN 115389240 A (LEJU (SHENZHEN) ROBOT TECHNOLOGY CO., LTD.) 25 November 2022 (2022-11-25) description, paragraphs [0070]-[0153], and figures 1-5 | 1-9 |
| A | CN 112528434 A (SHANGHAI STEP ROBOTICS CORPORATION) 19 March 2021 (2021-03-19) entire document | 1-9 |
| A | CN 108608426 A (CHANGCHUN UNIVERSITY OF TECHNOLOGY) 02 October 2018 (2018-10-02) entire document | 1-9 |
| A | CN 113742865 A (AUBO (BEIJING) INTELLIGENT TECHNOLOGY CO., LTD.) 03 December 2021 (2021-12-03) entire document | 1-9 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 April 2024** | **20 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/081899**

### C. DOCUMENTS CONSIDERED TO BE RELEVANT

| Category* | Citation of document, with indication, where appropriate, of the relevant passages | Relevant to claim No. |
|---|---|---|
| A | WO 2021086106 A1 (NEUROMEKA) 06 May 2021 (2021-05-06)<br>entire document | 1-9 |

Form PCT/ISA/210 (second sheet) (July 2022)

**INTERNATIONAL SEARCH REPORT**
Information on patent family members

International application No.

**PCT/CN2024/081899**

| Patent document cited in search report | | | Publication date (day/month/year) | Patent family member(s) | | | Publication date (day/month/year) |
|---|---|---|---|---|---|---|---|
| CN | 116021554 | A | 28 April 2023 | None | | | |
| CN | 115389240 | A | 25 November 2022 | None | | | |
| CN | 112528434 | A | 19 March 2021 | CN | 112528434 | B | 06 January 2023 |
| CN | 108608426 | A | 02 October 2018 | None | | | |
| CN | 113742865 | A | 03 December 2021 | None | | | |
| WO | 2021086106 | A1 | 06 May 2021 | EP | 4052863 | A1 | 07 September 2022 |
| | | | | EP | 4052863 | A4 | 06 December 2023 |
| | | | | KR | 20210053187 | A | 11 May 2021 |
| | | | | KR | 102356660 | B1 | 07 February 2022 |
| | | | | US | 2022410388 | A1 | 29 December 2022 |

Form PCT/ISA/210 (patent family annex) (July 2022)